# FASCICULE DE BREVET EUROPEEN

(11) **EP 2 285 649 B1**
(45) Date de publication et mention de la délivrance du brevet: **14.11.2012**
(21) Numéro de dépôt: 09745909.3
(22) Date de dépôt: 29.04.2009
(51) Int. Cl.: B62D 47/02, B62D 31/02

(54) **PASSAGE D ' INTERCIRCULATION ENTRE AU MOINS DEUX MODULES ROUTIERS RELIÉS ENTRE EUX DE FAÇON DISSOCIABLE POUR FORMER UNE RAME OU UN TRAIN ROUTIER.**
ÜBERGANGSBRÜCKE ZWISCHEN MINDESTENS ZWEI STRASSENMODULEN, DIE ZUR BILDUNG EINES FAHRZEUGZUGS ODER EINSES TRIEBZUGS TRENNBAR VERBUNDEN SIND
INTERCOMMUNICATING GANGWAY BETWEEN AT LEAST TWO ROAD MODULES DETACHABLY CONNECTED TO FORM A ROAD TRAIN OR A TRAINSET

(30) Priorité: 06.05.2008 FR 0802520
(43) Date de publication de la demande: 23.02.2011
(73) Titulaire: Lohr Industrie, 67980 Hangenbieten (FR)
(72) Inventeur: ANDRE, Jean-Luc, F-67120 Molsheim (FR)
(74) Mandataire: Metz, Paul
(86) Numéro de dépôt international: PCT/FR2009/000504
(87) Numéro de publication internationale: WO 2009/138590

(56) Documents cités:
- WO-A-2004/014715
- WO-A-2007/132121
- DE-A1- 4 411 241

## Description

La présente invention se rapporte à un passage d'intercirculation entre deux modules successifs routiers motorisés d'un train routier de modules routiers constitué d'une pluralité de modules routiers motorisés articulés entre eux par une liaison d'articulation dissociable à espace inter-modules minimale, au moins en configuration de ligne droite.

Afin de réaliser un passage d'intercirculation court en configuration de ligne droite entre deux modules routiers successifs, on utilise un attelage garantissant, au moins en ligne droite, un espace minimal entre les deux faces frontales arrière et avant en regard de deux modules successifs.

Selon une réalisation particulière, les deux faces frontales en regard sont incurvées et de préférence circulaires.

Cette conformation permet de réduire l'espace intermédiaire inter-modules à une valeur minimale faible, mais compatible avec la sécurité, permettant de se dispenser de soufflet de protection pour le passage d'intercirculation des passagers et d'éviter une montée dangereuse de personnes dans les modules en y pénétrant transversalement par l'extérieur à travers le passage d'intercirculation. Ce risque est en effet, non négligeable en cas de cohue ou avant le départ, juste après la fermeture des portes principales.

Le transport urbain et interurbain de personnes par des véhicules routiers s'oriente vers des solutions à trains routiers qui sont des rames routières formées de plusieurs modules routiers motorisés indépendants à l'état isolés, mais associables rapidement en trains routiers ou rames pour parcourir des tronçons communs de trajet.

La flexibilité et la modularité de cette formule de transport urbain en commun la rendent particulièrement séduisante à tous points de vue aux décideurs de toutes les villes en demande d'équipement de transport en commun urbains.

En effet, chaque module routier peut parcourir de façon indépendante une ligne de trajet en faubourg et s'associer à d'autres modules avant de pénétrer dans les quartiers du centre ville pour former une rame routière ou un train routier à un seul chauffeur pour le module de tête, puis se dissocier après la traversée du centre ville selon des modules motorisés indépendants, assurant l'acheminement particulier des passagers dans les directions spécifiques et diverses, desservies dans les faubourgs.

Pour la mise en oeuvre de cette technique de transport se pose de suite la nécessité pour les passagers de pouvoir passer aisément et en toute sécurité d'un module à l'autre sans descendre de voiture. Il est nécessaire de prévoir un attelage entre ces modules, les modules suiveurs n'ayant pas de chauffeur. Cet attelage mécanique ou immatériel permettra au moins de diriger les véhicules suiveurs pour les passages en courbe et de les aligner aux stations avec une distance mini entre les modules.

On connaît déjà un dispositif avec timon télescopique et soufflet d'intercirculation rétractable, repliable comme décrit dans les publications WO 2004/014715 et WO 2007/132121.

Le document WO 2004/014715 A décrit, en effet, un passage d'intercirculation entre modules routiers successifs l'un meneur et l'autre suiveur motorisés et indépendants à l'état isolés, présentant des portes latérales et d'accès et des portes de communication et, les modules routiers étant reliés entre eux par une liaison inter-modules pour former une rame ou un train routier, tel la liaison inter-module est dissociable et telle qu'elle permette l'obtention d'une distance minimale inter-modules au moins dans leur configuration de ligne droite, et de retrouver l'alignement après les courbes, les faces frontales et en regard possèdent chacune une porte de communication et d'accès au passage d'intercirculation.

Pour résoudre au mieux le problème ci-dessus formulé, il faut pouvoir constituer un espace inter-modules le plus court possible et de préférence déjà prédisposé au passage d'intercirculation.

On connaît déjà divers types de passages d'intercirculation entre des modules articulés les uns à la suite des autres.

Ces passages, dans leur version de base, comportent en partie inférieure des plaques pivotantes libres, se recouvrant l'une l'autre pour assurer la protection inférieure et le support de marche des passagers en ligne droite et dans les virages. La protection latérale et supérieure est apportée par un soufflet se contractant ou s'étendant dans les virages.

Cette technique de soufflet est chère, encombrante et disgracieuse. En effet, le soufflet ayant une longueur utile assez importante à l'état déployé pour permettre les débattements des modules en courbe notamment, s'avère une fois replié encombrant et lourd. Le mécanisme de déploiement-repliement des soufflets est complexe. Finalement, la longueur du convoi articulé étant réglementairement limité, il s'ensuit que la longueur du soufflet réduit considérablement la longueur des modules. Ce qui pénalise l'usage en véhicule isolé.

Afin de permettre la circulation des passagers entre les modules routiers lorsqu'ils sont groupés et en configuration de ligne droite d'un train routier, on prévoit des passages d'intercirculation accessibles et utilisables par les voyageurs uniquement en ligne droite, notamment pendant les arrêts en gare ou en station, de longueur minimale et suffisamment courts pour ne pas nécessiter de soufflets et éviter une pénétration latérale dangereuse de voyageurs pressés, distraits ou indélicats et pour éviter de laisser un usager coincé entre les portes lors du passage.

Par ailleurs, pour des raisons de sécurité, le passage d'intercirculation ne peut s'effectuer qu'en traversant deux portes en regard, que les passagers ne peuvent commander en ouverture qu'en configuration de ligne droite et de préférence qu'à l'arrêt avec une gestion de la sécurité identique à celle employée pour les portes latérales.

La sécurité globale est ainsi assurée. D'une part, le passage d'intercirculation n'est accessible qu'en configuration de ligne droite et d'autre part, la pénétration latérale dans l'espace d'intercirculation, bien qu'interdite aux voyageurs est rendue impossible, en raison de son étroitesse exceptionnelle.

De plus, cette solution permet de se dispenser de soufflet tout en apportant une sécurité et une protection équivalentes. On pourra prévoir une chicane ou un joint souple en partie supérieure pour limiter les entrées d'eau quand les portes de communication sont ouvertes.

D'autres caractéristiques et avantages de l'invention apparaîtront dans la description qui suit, donnée à titre d'exemple et accompagnée des dessins dans lesquels :
- la figure 1 est une vue schématique en perspective d'un module routier isolé montrant des voyageurs utilisant les portes latérales,
- la figure 2 est une vue schématique en perspective illustrant l'approche d'un deuxième module routier en vue de l'accouplement,
- la figure 3 est une vue schématique en perspective montrant deux modules routiers du même type reliés entre eux selon un espace intermédiaire inter-modules minimal,
- la figure 4 est une vue schématique en perspective montrant par un écorché l'ouverture d'une porte de communication entre les modules.

La présente invention porte sur un passage d'intercirculation 1 étroit sans soufflet entre deux modules routiers successifs d'un nombre quelconque de modules routiers reliés les uns à la suite des autres. Ces modules routiers sont reliés entre eux par une liaison inter-modules également quelconque, mais permettant d'aligner les modules et de rendre minimale en ligne droite la distance entre les deux faces frontales en regard de deux modules routiers successifs.

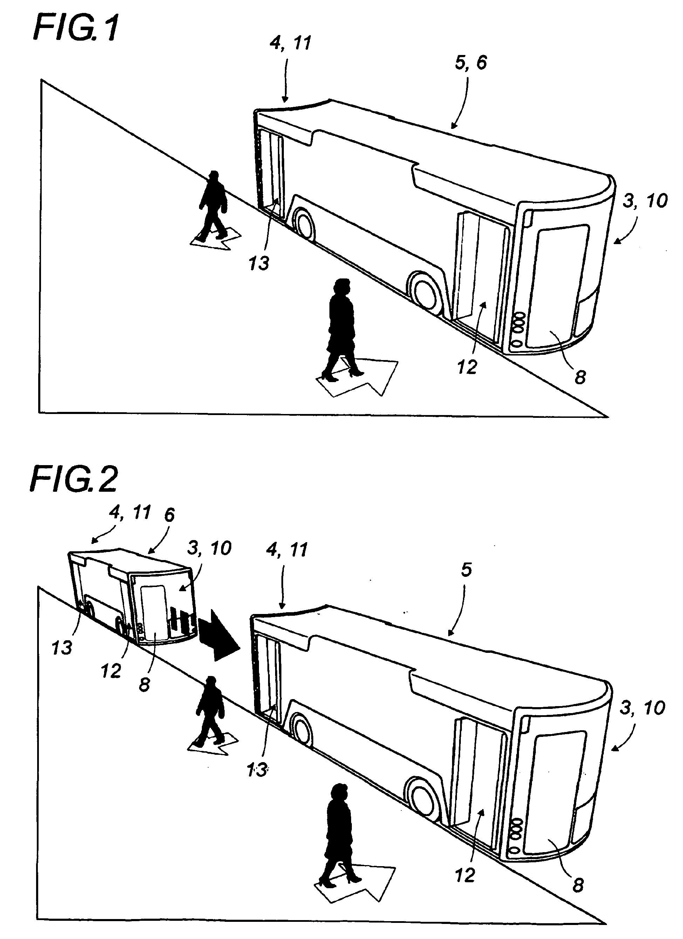

Le passage d'intercirculation 1 est situé dans l'espace intermédiaire 2 existant entre les deux faces frontales arrière 3 et avant 4 en regard de deux modules routiers successifs, l'un meneur 5 et l'autre suiveur 6, d'un train routier 7 formé d'une pluralité de modules routiers motorisés dont au moins deux modules routiers successifs comme représenté sur les figures 2, 3 et 4.

Chacune de ces faces frontales 3 et 4 présentent au moins une porte de communication respectivement 8 et 9 et une conformation générale dégageante et non interférante entre elles dans les courbes par exemple des formes incurvées notamment circulaires l'une convexe 10 et l'autre concave 11 comme représenté sur les figures.

Dans le cas de formes circulaires, le centre du cercle définissant ces formes est de préférence, mais non obligatoirement, le centre de pivotement de l'articulation dissociable reliant deux modules successifs 5 et 6 entre eux.

Bien entendu, les faces frontales en regard 3 et 4 peuvent affecter une autre conformation dégageante ou non. C'est en particulier le cas des modules de faible capacité.

Les portes de communication 8 et 9 sont prévues dans chacune des faces frontales 3 et 4 à des endroits opposés de manière à se trouver en face l'une de l'autre en configuration de ligne droite.

Les portes 8 et 9 sont de préférence du type coulissantes, c'est-à-dire dégageantes en ouverture par effacement le long de la paroi adjacente.

Elles peuvent être incurvées pour s'intégrer parfaitement contre la face frontale adjacente.

L'ouverture de ces portes ne sera autorisée qu'en configuration de ligne droite et au moins à l'arrêt en gare ou en station, par exemple comme les portes latérales.

Le support bas du passage d'intercirculation peut être formé par une plate-forme fixe en saillie et en porte-à-faux qui est prévue à l'arrière du module routier meneur 5 et ceci sensiblement à niveau avec les planchers des deux modules routiers successifs 5 et 6 articulés de façon dissociable entre eux et composant le train routier 7.

La plate-forme fixe peut aussi bien être en saillie à l'avant du module suiveur 6 notamment à l'avant de sa face frontale avant 4.

Si l'attelage entre les modules permet une distance très réduite, il n'est plus nécessaire de prévoir de plate-forme de passage, car l'accès peut se faire directement d'un module à l'autre.

Le passage des voyageurs d'un module routier à l'autre s'effectue de façon tout à fait naturelle sans changement de niveau et sur une longueur minimale qui est celle de l'espace intermédiaire 2 existant entre deux faces frontales 3 et 4 en regard au moins en configuration de ligne droite.

Cette plate-forme peut assurer aussi la protection mécanique des moyens d'accouplement et de désaccouplement rapides de l'articulation de la liaison dissociable entre les deux modules routiers.

Une protection supérieure (non représentée) peut être prévue par une forme supérieure fixe en saillie s'étendant sur tout l'intervalle à partir de l'une ou l'autre des deux faces frontales en regard ou sur une partie de l'intervalle inter-modules à partir de chacune des faces frontales en regard à la manière d'un auvent.

La gestion de l'ouverture des portes de l'espace d'intercirculation s'effectue par un organe central en liaison avec le fonctionnement général.

Par exemple, l'ouverture s'effectuera automatiquement sur une commande spécifique du voyageur qui sera suivie d'une action en ouverture lorsque celle-ci aura été autorisée à l'arrêt.

Il pourra s'agir de la première ouverture et les portes resteront ouvertes jusqu'au départ au moment duquel la fermeture automatique aura lieu.

Les opérations d'ouvertures et de fermetures pourront être automatisées à partir de détecteurs à radar ou autres.

De façon générale, la gestion de la sécurité des portes de communication est identique à celle utilisée pour les portes latérales.

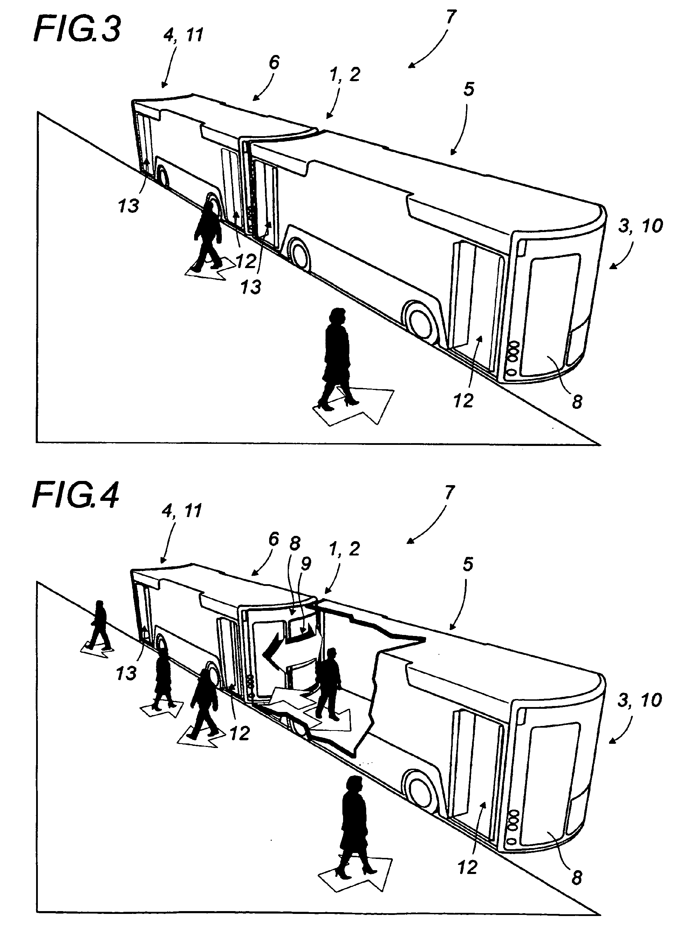

L'illustration générale de la figure 4 porte sur le trajet des voyageurs lors d'un arrêt.

Les portes latérales d'accès avant 12 et arrière 13 sont ouvertes en station pour la montée ou la descente des passagers lors d'un arrêt en gare ou en station. En même temps, le fonctionnement des portes de communication 8 et 9 est autorisé. Celles-ci s'ouvrent à la demande ou automatiquement sur détection d'un passager à l'entrée permettant à celui-ci de traverser l'espace d'intercirculation 2 pour accéder au module voisin ou éventuellement sortir de la rame par le module voisin.

Il importe que le passage d'intercirculation 1 soit le plus court possible, pour une traversée rapide ne nécessitant que peu de protection, mais aussi pour rendre impossible une entrée ou une sortie transversale des passagers non autorisées car dangereuses, ou le coincement d'un enfant par exemple entre ces deux portes fermées.

L'invention apporte ces importants avantages en plus de ceux de l'intercirculation liés au système de transport visé.

La présente invention est aussi indépendante du mode de liaison et du type d'attelage ou d'articulation entre les modules routiers. Elle peut être mécanique ou immatérielle c'est-à-dire sans support physique. Il suffit qu'elle soit dissociable et rapproche suffisamment, au moins en ligne droite, les deux modules routiers successifs ainsi reliés et de façon préférentielle mais non obligatoire que la liaison comporte une consigne en trajectoire du module suiveur 6.

## Revendications

1. Passage d'intercirculation entre deux modules routiers successifs l'un meneur (5) et l'autre suiveur (6) motorisés et indépendants à l'état isolés, présentant des portes latérales (12) et (13) d'accès et des portes de communication (8) et (9), les modules routiers étant reliés entre eux par une liaison inter-modules pour former une rame ou un train routier **caractérisé en ce que**
• la liaison inter-module est dissociable et comprend des moyens d'obtention d'une distance minimale inter-modules au moins dans leur configuration de ligne droite, et des moyens de retour en alignement après les courbes,
• les faces frontales (3) et (4) en regard possèdent chacune une porte de communication (8) et (9) d'accès au passage d'intercirculation et des moyens d'ouverture pour ces portes de communication (8) et (9) qui n'autorisent leur ouverture qu'en ligne droite et au moins à l'arrêt en gare ou en station

2. Passage d'intercirculation selon la revendication 1 **caractérisé par** une consigne en trajectoire du module suiveur (6).

3. Passage d'intercirculation selon la revendication 1 **caractérisé en ce que** la liaison dissociable inter-modules est une liaison articulée.

4. Passage d'intercirculation selon la revendication 1 **caractérisé en ce que** la liaison dissociable inter-modules est à attelage court.

5. Passage d'intercirculation selon la revendication 1 **caractérisé en ce que** la liaison inter-modules est immatérielle,

6. Passage d'intercirculation selon la revendication 1 **caractérisé en ce qu'**une plate-forme d'intercirculation servant de plancher, est en saillie de la face frontale arrière (3) du module meneur (5).

7. Passage d'intercirculation selon la revendication 1 **caractérisé en ce qu'**une plate-forme d'intercirculation servant de plancher, est en saillie de la face frontale avant (4) du module suiveur (6).

8. Passage d'intercirculation selon la revendication 1 ou 2 **caractérisé en ce que** les parties supérieures des deux faces frontales (3) et (4) présentent une saillie en auvent destinées à former une protection supérieure.

9. Passage d'intercirculation selon la revendication 1 ou 2 **caractérisé en ce que** l'une ou l'autre des parties supérieures des deux faces frontales (3) et (4) présente une saillie en auvent destinée à former une protection supérieure.

10. Passage d'intercirculation selon la revendication 1 **caractérisé en ce que** la gestion des portes de communication (8) et (9) est telle que l'ouverture de celles-ci n'est autorisée qu'en configuration de ligne droite.

11. Passage d'intercirculation selon la revendication 1 ou 9 **caractérisé en ce que** la gestion de la sécurité des portes de communication (8) et (9) est identique à celle des portes latérales (12) et (13).

## Claims

1. An interconnecting gangway between two successive road modules, one a leading module (5) and one a trailing module (6) that are motor-driven and independent when isolated, having lateral access doors (12) and (13) and communication doors (8) and (9), the road modules being interconnected by an inter-module connection to form a series or a road train set, **characterized in that**
. the inter-module connection is disconnectable and comprises means for obtaining a minimal inter-module distance at least in the straight line configuration, and means for resuming the alignment after curves,
. the facing front surfaces (3) and (4) each possess a communication door (8) and (9) accessing the interconnecting gangway and means for opening these communication doors (8) and (9) which only allows opening when in a straight line and at least during a stop at a train station or stop.

2. An intercommunicating gangway according to claim 1 **characterized by** a trajectory instruction of the trailing module (6).

3. An intercommunicating gangway according to claim 1 **characterized in that** the disconnectable inter-module connection is an articulated connection.

4. An intercommunicating gangway according to claim 1 **characterized in that** the disconnectable inter-module connection is a short hitching device.

5. An intercommunicating gangway according to claim 1 **characterized in that** the inter-module connection is intangible.

6. An intercommunicating gangway according to claim 1 **characterized in that** an intercommunicating platform serving as a floor projects from the rear front surface (3) of the leading module (5).

7. An intercommunicating gangway according to claim 1 **characterized in that** an intercommunicating platform serving as a floor projects from the forward front surface (4) of the trailing module (6).

8. An intercommunicating gangway according to claim 1 or 2 **characterized in that** the upper portions of the two front surfaces (3) and (4) have a projecting canopy for overhead protection.

9. An intercommunicating gangway according to claim 1 or 2 **characterized in that** one or the other of the upper portions of the two front surfaces (3) and (4) has a projecting canopy for overhead protection.

10. An intercommunicating gangway according to claim 1 **characterized in that** the control for the communication doors (8) and (9) is such that they are only allowed to open when in straight line configuration.

11. An intercommunicating gangway according to claim 1 or 9 **characterized in that** the safety control for the communication doors (8) and (9) is identical to the control for the lateral doors (12) and (13).

## Patentansprüche

1. Übergangsbrücke zwischen zwei aufeinanderfolgenden Straßenmodulen, von denen eines zieht (5) und das andere gezogen wird (6), die motorisiert und im isolierten Zustand unabhängig sind, mit seitlichen Türen (12) und (13) zum Zugang sowie Verbindungstüren (8) und (9), wobei die Straßenmodule durch eine Modulverbindung miteinander verbunden sind, zur Bildung eines Fahrzeugzugs oder eines Zugverbands, **gekennzeichnet dadurch, dass**
• die Modulverbindung trennbar ist und Mittel zur Erreichung eines minimalen Modulabstandes umfasst, zumindestens in der Ausgestaltung als gerade Linie, sowie nach den Kurven ausgerichtete Rücklaufmittel,
• die einander gegenüberliegenden frontalen Seiten (3) und (4) je eine Verbindungstür (8) und (9) zum Zugang zur Übergangsbrücke besitzen sowie Öffnungsmittel für diese Verbindungstüren (8) und (9), die die Öffnung nur in gerader Linie zulassen, und zwar mindestens beim Anhalten im Bahnhof oder an einer Straßenmodulstation

2. Übergangsbrücke nach Anspruch 1, **gekennzeichnet durch** eine Bahninstruktion des Folgemoduls (6) auf der Fahrbahn.

3. Übergangsbrücke nach Anspruch 1, **gekennzeichnet dadurch, dass** die trennbare Modulverbindung eine Gelenkverbindung ist.

4. Übergangsbrücke nach Anspruch 1, **gekennzeichnet dadurch, dass** die trennbare Modulverbindung eine Kurzkupplung aufweist.

5. Übergangsbrücke nach Anspruch 1, **gekennzeichnet dadurch, dass** die Modulverbindung ohne Stütze ist.

6. Übergangsbrücke nach Anspruch 1, **gekennzeichnet dadurch, dass** eine Durchgangsplattform, die als Fußboden dient, von der Hinterseite (3) des Triebwagens (5) übersteht.

7. Übergangsbrücke nach Anspruch 1, **gekennzeichnet dadurch, dass** eine Durchgangsplattform, die als Fußboden dient, von der Vorderseite (4) des Anhängers (6) übersteht.

8. Übergangsbrücke nach Anspruch 1 oder 2, **gekennzeichnet dadurch, dass** die oberen Teile der beiden Vorderseiten (3) und (4) ein Vordach aufweisen, als oberen Schutz.

9. Übergangsbrücke nach Anspruch 1 oder 2, **gekennzeichnet dadurch, dass** das eine oder das andere der oberen Teile der beiden Vorderseiten (3) und (4) ein Vordach aufweist, als oberen Schutz.

10. Übergangsbrücke nach Anspruch 1, **gekennzeichnet dadurch, dass** die Verbindungstüren (8) und (9) derart funktionieren, dass ihre Öffnung nur in gerader Linie zugelassen ist.

11. Ubergangsbrücke nach Anspruch 1 oder 9, **gekennzeichnet dadurch, dass** das Sicherheitsmanagement der Verbindungstüren (8) und (9) identisch mit dem der seitlichen Türen (12) und (13) ist.
